# EUROPEAN PATENT APPLICATION

(11) **EP 1 977 854 A1**
(43) Date of publication of application: **08.10.2008**
(21) Application number: 07405309.1
(22) Date of filing: 16.10.2007
(51) Int. Cl.: B23Q 1/76, B23Q 39/02, B23B 3/06

(54) **Combined machining lathe**

(30) Priority: 04.04.2007 JP 2007098790
(71) Applicant: YAMAZAKI MAZAK CORPORATION, Niwa-gun Aichi, pref. (JP)
(72) Inventor: Nakashima Akihiko c/o Yamazaki Mazak Corporation, Aichi Pref (JP); Kageyama Keisuke c/o Yamazaki Mazak Corpration, Niwa Gun Aichi Pref (JP); Goshima Yasuhiro c/o Yamazaki Mazak Corporation, Aichi Pref (JP)
(74) Representative: Moinas, Michel

(57) **Abstract**

There is provided a combined machining lathe provided with a work supporting device for preventing the occurrence of chattering at the time when a work is machined. The combined machining lathe 1 has a first main spindle 10 and a second main spindle 20 to grip the work W₁. An upper tool rest 30 is provided above a centerline connecting the first main spindle 10 and the second main spindle 20, and a lower tool rest 50 is provided below the centerline. The upper tool rest 30 is changeably mounted with a milling tool T₁ or the like to mill the work W₁. The lower tool rest 50 has a turret tool rest 70, and is provided with the work supporting device 100 in addition to a tool. The work supporting device 100 supports the work W₁ from the downside to prevent the occurrence of chattering at the time of machining.

## Description

### BACKGROUND OF THE INVENTION

### Field of the Invention

The present invention relates to a combined machining lathe provided with a work supporting device for preventing chattering (vibrations) occurring at the time of machining.

### Description of the Related Art

A combined machining lathe that has a first main spindle and a second main spindle disposed opposedly and can perform not only turning but also milling has come into wide use. Japanese Patent Laid-Open Publication No. 2003-266268 (Patent Document 1) has disclosed a lathe having a chatter preventing member provided at a position adjacent to a turning tool so as to be capable of advancing toward and retreating from a work.

In the case where a long work or the like supported by the first and second main spindles are milled, a bending stress acts on the work when a milling tool is pressed against the work, which causes chattering. To cope with the bending stress applied to the work, it is desirable to support the work from the side opposite to the milling tool.

On the combined machining lathe provided with a lower tool rest facing to an upper tool rest for driving the milling tool, a work supporting member can be provided on the lower tool rest.

### SUMMARY OF THE INVENTION

An object of the present invention is to provide a combined machining lathe having a work supporting member on a lower tool rest and providing a function of preventing the occurrence of chattering at the time of machining.

To achieve the above object, as basic means, the combined machining lathe in accordance with the present invention includes a first main spindle for gripping a work; a second main spindle disposed so as to face to the first main spindle; an upper tool rest disposed above a centerline connecting the first main spindle and the second main spindle; and a lower tool rest disposed below the centerline connecting the first main spindle and the second main spindle. The lower tool rest has a work supporting device for supporting the work from the downside.

Also, the work supporting device has a work supporting holder mounted detachably on the lower tool rest and a work supporting member that is mounted in the work supporting holder and makes contact with the work.

Also, the work supporting device has a spherical part in the tip end part thereof that makes contact with the work.

Further, the work supporting device has a spring mechanism between the work supporting holder and the work supporting member.

A servomotor for feeding the spindle of the lower tool rest is provided, and thereby the support force of work can also be controlled by the torque control of the servomotor.

On the combined machining lathe in accordance with the present invention, the lower tool rest is provided with the work supporting device. Thereby, vibrations are prevented, and thereby the occurrence of chattering can be prevented reliably by supporting the work at the optimal position especially when a long work is milled.

### BRIEF DESCRIPTION OF THE DRAWINGS

FIG. 1 is a front view of a combined machining lathe in accordance with an embodiment of the present invention;
FIG. 2 is a side view of a combined machining lathe in accordance with an embodiment of the present invention;
FIG. 3 is an explanatory view showing one example of the use of a work supporting device with respect to a square work;
FIG. 4 is an explanatory view showing another example of the use of a work supporting device with respect to a square work;
FIG. 5 is an explanatory view showing an example of the use of a work supporting device with respect to a cylindrical work;
FIG. 6 is an explanatory view showing an example of the use of a work supporting device with respect to a cylindrical work; and
FIG. 7 is an explanatory view showing another example of the use of a work supporting device with respect to a cylindrical work.

### DETAILED DESCRIPTION OF THE PREFERRED EMBODIMENTS

Hereunder, the construction and function of a combined machining lathe in accordance with an embodiment of the present invention are explained.

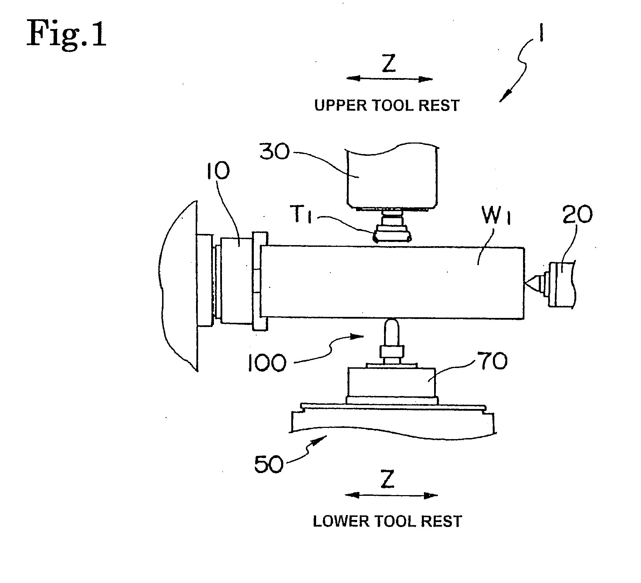

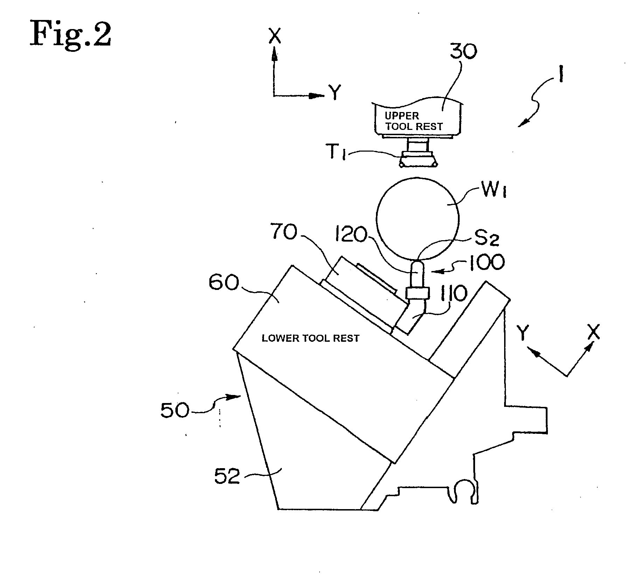

FIGS. 1 and 2 are a front view and a side view, respectively, of the combined machining lathe in accordance with this embodiment.

The combined machining lathe, the whole of which is denoted by reference numeral 1, has a first main spindle 10 for gripping a work W₁ and a second main spindle 20 disposed so as to face to the first main spindle 10.

The combined machining lathe 1 is provided with an upper tool rest 30 disposed above a centerline connecting the first main spindle 10 and the second main spindle 20 and a lower tool rest 50 disposed below the centerline.

The upper tool rest 30 is controlled so as to move in the Z-axis direction parallel with the centerline connecting the first main spindle 10 and the second main spindle 20 and also in the X-axis and Y-axis directions perpendicular to the Z axis.

On the tool main spindle of the upper tool rest 30, in addition to a turning tool, a milling tool T₁ or the like is changeably mounted to perform turning, milling, or the like on the work W₁.

The lower tool rest 50 has a base 52 that moves in the Z-axis direction and a housing 60 that moves in the X-axis direction with respect to the base 52, and a turret tool rest 70 moves in the Y-axis direction with respect to the housing 60.

The turret tool rest 70 can be mounted with a rotary tool such as a drill or a milling tool in addition to the turning tool.

A servomotor for feeding the spindles of the upper and lower tool rests has a function of carrying out torque detection and torque control.

On the combined machining lathe in accordance with the present invention, the lower tool rest is provided with a work supporting device 100.

The work supporting device 100 includes a work supporting holder 11 mounted on the turret tool rest 70 and a work supporting member 120 disposed insertedly in the work supporting holder 110. The work supporting member 120 can support the surface of work smoothly because the tip end part thereof that makes contact with the work is formed into a spherical shape.

In the case where the work W₁ has, for example, a long round bar shape as shown in FIGS. 1 and 2, the work supporting device 100 is positioned at a position facing to the upper tool rest 30 so as to be capable of receiving machining resistance caused by a milling tool T₁. The work supporting device 100 can follow the movement of the upper tool rest 30, and therefore can prevent the occurrence of chattering more effectively.

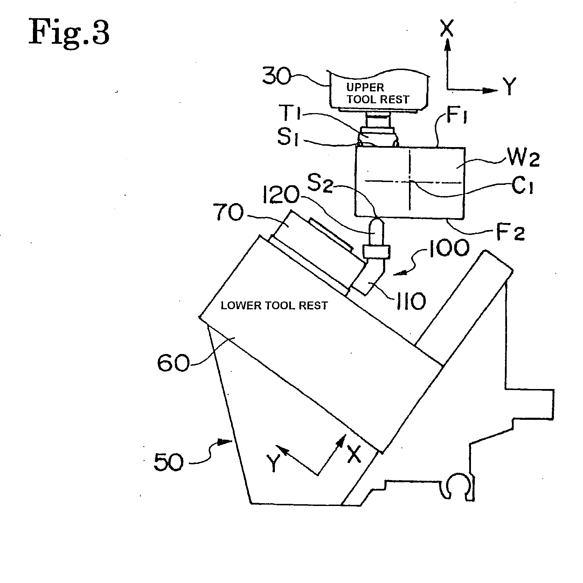

FIG. 3 shows one example of the use of the work supporting device 100 with respect to a square work W₂.

In this example, it is assumed that the upper tool rest 30 is mounted with the milling tool T₁ to mill a top surface F₁ of the work W₂. At this time, the work supporting device 100 mounted on the turret tool rest 70 of the lower tool rest 50 supports a bottom surface F₂ of the work W₂. By supporting the work W₂ at a lower position S₂ in the vertical direction with respect to a position S₁ with which the milling tool T₁ makes contact, the work W₂ can be supported effectively.

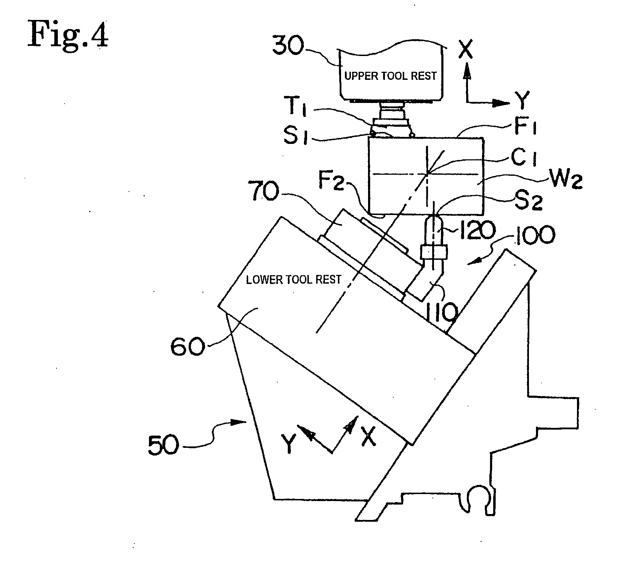

FIG. 4 shows another example of the use of the work supporting device 100 with respect to the square work W₂.

When the milling tool T₁ of the upper tool rest 30 machines the position S₁ of the top surface F₁ of the work W₂, the work supporting device 100 mounted on the lower tool rest 50 supports the position S₂ of the bottom surface F₂ of the work W₂.

The position S₁ and the position S₂ are not located on the vertical line. In some cases, the lower position in the vertical direction of the machined portion is not necessarily the optimal position for vibration prevention. In this case, the work W₂ is supported at the most effective position. Also, in the case where the work W₂ cannot be supported just under the machined portion, the work supporting device 100 is moved to an arbitrary position at which the support is easy to accomplish, by which the work W₂ can be supported reliably.

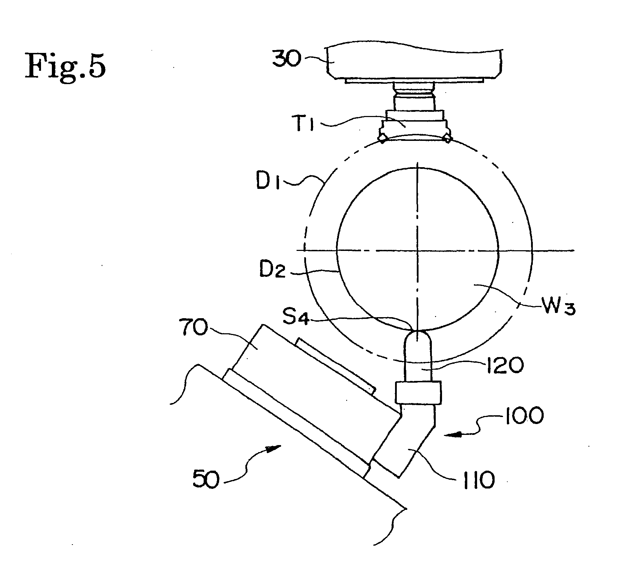

FIG. 5 is an explanatory view showing an example of the use of the work supporting device 100 with respect to a cylindrical work W₃.

FIG. 5 shows the case where the work W₃ has a stepped cylindrical shape having a large-diameter part D₁ and a small-diameter part D₂. The milling tool T₁ of the upper tool rest 30 mills the top surface of the large-diameter part D₁. During this time, the work supporting device 100 mounted on the turret tool rest 70 of the lower tool rest 50 supports a position S₄ of the bottom surface of the stepped small-diameter part D₂.

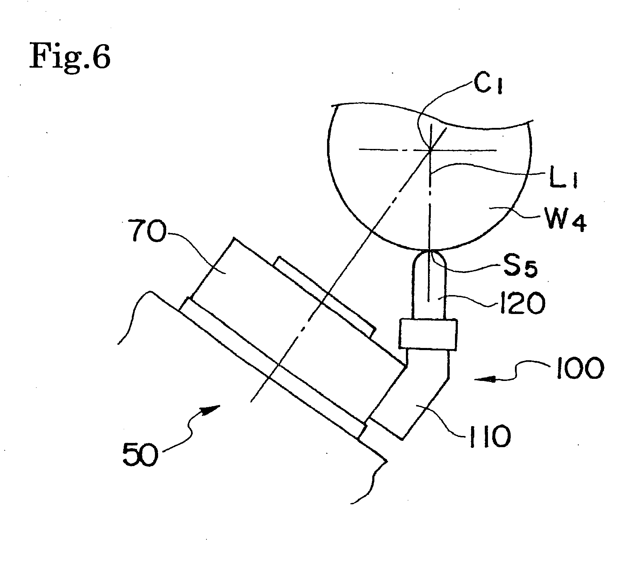

FIG. 6 is an explanatory view showing an example of the use of the work supporting device 100 with respect to a cylindrical work W₄.

In this example, the work supporting device 100 supports a position S₅ on a vertical line L₁ extending downward vertically from a center point C₁ of the cylindrical work W₄.

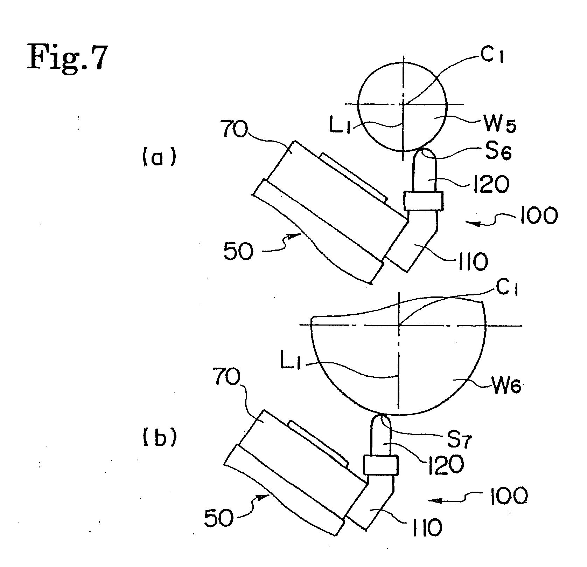

FIG. 7 is an explanatory view showing another example of the use of the work supporting device 100 with respect to cylindrical works W₅ and W₆.

FIG. 7(a) shows an example in which the work supporting device 100 supports the work W₅ at a position S₆ shifting to the right-hand side in the figure with respect to the vertical line L₁ passing through the center point C₁ of the cylindrical work W₅.

FIG. 7(b) shows an example in which the work supporting device 100 supports the work W₆ at a position S₇ shifting to the left-hand side in the figure with respect to the vertical line L₁ passing through the center point C₁ of the cylindrical work W₆.

In the present invention, the configuration is made such that the work supporting member 120 of the work supporting device 100 can be brought into contact with the work smoothly by making the tip end shape of the work supporting member 120 spherical.

Also, on the combined machining lathe of this type, the servomotor mounted in a driving system of the X and Y axes of the lower tool rest can carry out torque control. Therefore, the torque applied to the servomotor is monitored and controlled, by which the support force of work can be controlled optimally.

The configuration can also be made such that in place of the torque control of the servomotor, a spring mechanism is provided between the work supporting holder 110 and the work supporting member 120 of the work supporting device 100, and spindle movement is further accomplished after the work supporting member 120 has come into contact with the work, by which the work is supported by a fixed mechanical spring force.

In any case, the work is supported at an arbitrary position by giving a proper support force by utilizing the spindle feeding mechanism of the lower tool rest, and thereby the occurrence of vibrations at the time of machining is prevented, by which the occurrence of chattering can be prevented effectively.

## Claims

1. A combined machining lathe comprising:
a first main spindle for gripping a work;
a second main spindle disposed so as to face to the first main spindle;
an upper tool rest disposed above a centerline connecting the first main spindle and the second main spindle; and
a lower tool rest disposed below the centerline connecting the first main spindle and the second main spindle, wherein
the lower tool rest has a work supporting device for supporting the work from the downside.

2. A combined machining lathe comprising:
a first main spindle for gripping a work;
a second main spindle disposed so as to face to the first main spindle;
an upper tool rest disposed above a centerline connecting the first main spindle and the second main spindle; and
a lower tool rest disposed below the centerline connecting the first main spindle and the second main spindle, wherein
the lower tool rest has a work supporting device for supporting the work from the downside, and
the work supporting device has a work supporting holder mounted detachably on the lower tool rest and a work supporting member that is mounted in the work supporting holder and makes contact with the work.

3. The combined machining lathe according to claim 1, wherein the work supporting device has a spherical part in the tip end part thereof that makes contact with the work.

4. The combined machining lathe according to claim 2, wherein the work supporting device has a spring mechanism between the work supporting holder and the work supporting member.

5. The combined machining lathe according to claim 1, wherein a servomotor for feeding the spindle of the lower tool rest is provided, and thereby the support force of work is controlled by the torque control of the servomotor.
